# EUROPÄISCHE PATENTSCHRIFT

(11) **EP 0 541 848 B1**
(45) Veröffentlichungstag und Bekanntmachung des Hinweises auf die Patenterteilung: **19.01.1994**
(21) Anmeldenummer: 91119427.2
(22) Anmeldetag: 14.11.1991
(51) Int. Cl.: C02F 1/26

(54) **Verfahren zur Abtrennung von Aromaten aus A1C13 enthaltenden Abwässern**
Process for separating aromatic hydrocarbons from waste waters containing AICI3
Procédé pour séparer des hydrocarbures aromatiques des eaux usées contenant AICI3

(43) Veröffentlichungstag der Anmeldung: 19.05.1993
(73) Patentinhaber: BASF Aktiengesellschaft, 67063 Ludwigshafen (DE)
(72) Erfinder: Lausberg, Dietrich, Dr., W-6700 Ludwigshafen (DE); Nikles, Albert, W-6700 Ludwigshafen (DE); Uhr, Hermann, W-6710 Frankenthal (DE); Tremmel, Gregor, W-6718 Gruenstadt (DE); Aeckerle, Eckhard, W-6714 Weisenheim (DE); Deimling, Axel, Dr., W-6730 Neustadt (DE)

(56) Entgegenhaltungen:
- US-A- 3 536 617
- WORLD PATENTS INDEX Week 8032, Derwent Publications Ltd., London, GB; AN 80-56518C
- PATENT ABSTRACTS OF JAPAN vol. 11, no. 18 (C-398)(2465) 17. Januar 1987
- 'LEHR- UND HANDBUCH DER ABWASSERTECHNIK, BAND VI.' 1986 , ERNST & Sohn, Berlin

## Beschreibung

Bei der technischen Herstellung von Ethylbenzol nach dem in Ullmanns Encyklopädie der technischen Chemie, Verl. Chemie, Weinheim, Bd. 14 beschriebenen Verfahren fallen saure und alkalische Abwässer an. Diese enthalten Aromaten und andere Verunreinigungen.

An sich ist bekannt, daß geringe Mengen organischer Verunreinigungen aus wäßrigen Lösungen durch Phasentrennung abgetrennt werden können, wenn Zusätzlich soviel eines geeigneten, mit Wasser unmischbaren Lösungsmittels Zugegeben wird, daß zwei Phasen gebildet werden, von denen eine abgetrennt werden kann (sog. Ausschütteln). Im vorliegenden Fall erweist sich dieses Verfahren als schwierig oder sinnlos, weil beim Ausschütteln vorhandene Verunreinigungen äußerst schlecht in die nichtwäßrige Phase überführt werden und außerdem ja das Lösungsmittel - wie an sich bekannt - in der wäßrigen Phase in mehr oder minder hoher Konzentration verbleibt.

Es ist eine Aufgabe der Erfindung, ein einfaches Verfahren anzugeben, mit dem die organischen Verunreinigungen speziell des sauren, Aluminiumchlorid enthaltenden Abwassers abgetrennt werden können, bevor das Abwasser die Verfahrensumgebung verläßt. Die Schwierigkeit bei der Lösung der Aufgabe besteht darin, daß wäßriges Aluminiumchlorid manche Verunreinigungen hartnäckig festhält.

Die Erfindung löst diese Aufgabe durch ein Verfahren, bei dem man die Aromaten enthaltende Lösung mit soviel eines in Wasser bzw. Aluminiumchloridlösung schwerlöslichen Lösungsmittels versetzt, daß eine nichtwäßrige abtrennbare Phase gebildet werden kann, intensiv mischt und erhitzt, absitzen läßt, trennt und die wäßrige und nicht-wäßrige Phase getrennt aufarbeitet, wobei die Aufarbeitung der wäßrigen Phase eine Wasserdampfdestillation einschließt.

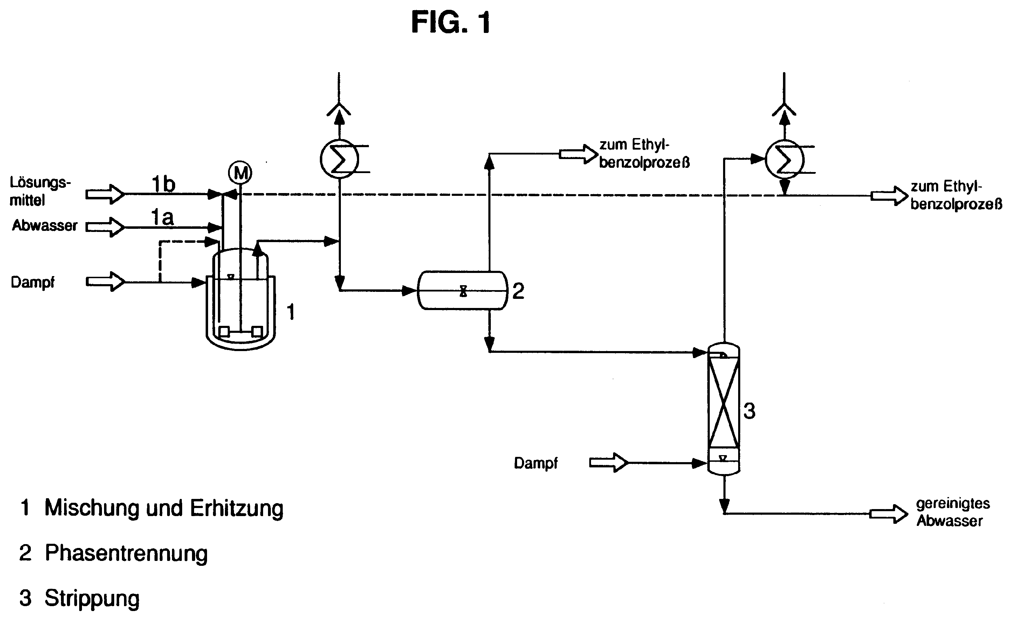

Praktisch kann man hierzu die nachstehend beschriebenen Vorrichtungen benutzen. Nach Fig. 1 wird das saure Abwasser zusammen mit dem organischen Lösungsmittel (1a, 1b) kontinuierlich in einen Rührkessel (1) gefahren. In dem dampfbeheizten Kessel erfolgt die Aufheizung indirekt über den Mantel bis auf Siedetemperatur des Abwassers. Man kann auch durch direktes Einblasen von Dampf erhitzen, wobei es zu einer entsprechenden Verdünnung kommt.

Über einen überlauf läuft das Zweiphasengemisch aus Wasser (flüssigsiedend) und Lösungsmittel in einen Phasentrennapparat (2). Entstehende Dämpfe werden mit einem Wasserkühler kondensiert. Im Phasentrennapparat trennen sich organische und wäßrige Phase durch Absitzenlassen.

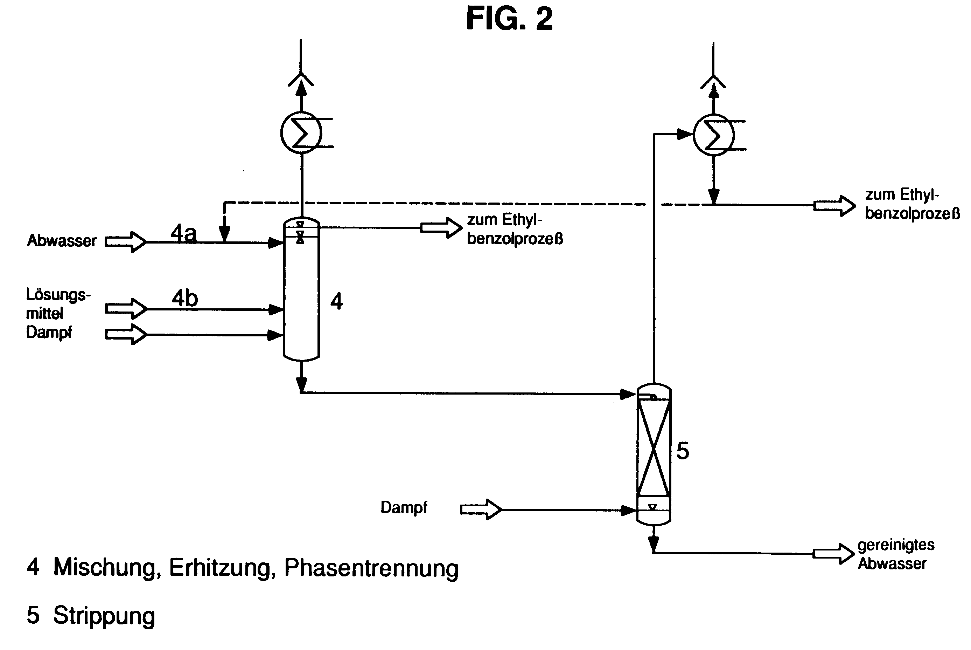

Anstelle eines Rührkessels und eines separaten Phasentrennapparates kann nach Fig. 2 auch eine Apparatur verwendet werden, bei der Mischung und Phasentrennung in einem Kolonnenapparat (4) vereinigt sind.

Die organische Phase kann mit dem organischen Produktstrom der Ethylbenzolherstellung weiterverarbeitet werden. Die wäßrige Phase enthält nun noch aromatische Bestandteile entsprechend deren Löslichkeit bei der Bearbeitungstemperatur.

Diese Aromaten werden in einer nachgeschalteten Füllkörperkolonne (3) bzw. (5) im Gegenstrom mit Wasserdampf ausgetrieben und an einem Kühler kondensiert. Das Kondensat kann entweder in einen geeigneten Strom der Ethylbenzolproduktion geleitet werden oder aber zum unbehandelten Abwasser zurückgeführt werden. Das am Kolonnensumpf ablaufende Abwasser ist aromatenfrei.

Das Lösungsmittel für das erfindungsgemäße Verfahren ist nicht frei wählbar. Es muß selbst mit Wasserdampf aus Aluminiumchloridlösung auszutreiben sein und sollte oberhalb von 100 bis 110°C sieden.

Als besonders günstig haben sich z.B. technisches Xylol und insbesondere die mehrfach alkylierten Benzole erwiesen, die das Ethylbenzolverfahren selbst als Nebenprodukte liefert. Der Übergang der Verunreinigungen in das Lösungsmittel wird durch Erhitzen z.B. auf 100 bis 120°C und gutes Vermischen gefördert.

### Beispiel

Saures Abwasser der Ethylbenzolherstellung soll gereinigt werden. Es enthält 19 Gew.-% AlCl₃ und ferner etwa
- 1 000 ppm: Benzol
- 1 000 ppm: Ethylbenzol
- 300 ppm: Polyalkylbenzol
- 600 ppm: hochsiedende Verunreinigungen und anorganische Feststoffe.

Als organisches Lösungsmittel verwendet man das als Nebenprodukt verfügbare Polyethylbenzol. Man vermischt es mit dem Abwasser in einem Volumenverhältnis von Abwasser/Polyethylbenzol = 3/1 und bei einer Verweilzeit von einer Viertelstunde bei 108°C unter Rühren, läßt eine halbe Stunde unter Schwerkrafteinfluß in organische und wäßrige Phase absitzen und verarbeitet die organische Phase im Ethylbenzolprozeß weiter. Die wäßrige Phase enthält neben AlCl₃ noch ca. 60 ppm Aromaten. In einer nachgeschalteten Füllkörperkolonne werden die Aromaten mit Wasserdampf ausgetrieben. Das erhaltene zweiphasige Strippdampfkondensat kann zur weiteren Verarbeitung entweder direkt zum Ethylbenzolprozeß weitergeleitet oder zum Misch- oder zum Phasentrennapparat zurückgeführt werden. Das ablaufende saure Abwasser ist aromatenfrei und läßt sich in jeder Weise weiterverwenden, die sich für wäßiges Aluminiumchlorid anbietet.

## Patentansprüche

1. Verfahren zur Abtrennung von Aromaten aus wäßrigen, Aluminiumchlorid enthaltenden Lösungen durch Phasentrennung in Gegenwart eines zusätzlichen Lösungsmittels, dadurch gekennzeichnet, daß man die Aromaten enthaltende Lösung mit soviel eines in Wasser bzw. Aluminiumchloridlösung schwerlöslichen, oberhalb von 100°C siedenden und mit Wasserdampf aus der Aluminiumchloridlösung destillierbaren Lösungsmittels versetzt, daß eine nicht-wäßrige abtrennbare Phase gebildet werden kann, intensiv mischt und erhitzt, absitzen läßt, trennt und die wäßrige und nicht-wäßrige Phase getrennt aufarbeitet, wobei die Aufarbeitung der wäßrigen Phase eine Wasserdampfdestillation einschließt.

2. Verfahren nach Anspruch 1, dadurch gekennzeichnet, daß als Losungsmittel Xylol oder mehrfach alkyliertes Benzol verwendet wird.

3. Vorrichtung zur Durchführung des Verfahrens nach Anspruch 1, umfassend einen direkt oder indirekt durch Dampf beheizbaren Rührkessel (1) mit Mitteln (1a, 1b) zur Zufuhr von wäßriger Lösung und Lösungsmitteln, ein Trenngefäp (2) sowie eine Strippkolonne (3) zur Wasserdampfdestillation.

4. Vorrichtung zur Durchführung des Verfahrens nach Anspruch 1, umfassend ein zur direkten Erhitzung mit Dampf eingerichtetes und mit Mitteln (4a, 4b) zur Zufuhr von wäßriger Lösung und Lösungsmitteln versehenes Misch- und Absitzgefäß (4) sowie eine Strippkolonne (5) zur Wasserdampfdestillation.

## Claims

1. A process for removing aromatic compounds from aqueous aluminum chloride-containing solutions by phase separation in the presence of an additional solvent, which comprises adding a solvent which is sparingly soluble in water or aluminum chloride solution, boils above 100°C and can be removed from the aluminum chloride solution by steam distillation, to the aromatic-compound-containing solution until a non-aqueous separable phase can be formed, intensively mixing and heating the mixture, allowing it to stand, separating it and separately working up the aqueous and non-aqueous phase, the work-up of the aqueous phase including a steam distillation.

2. A process as claimed in claim 1, wherein the solvent used is xylene or polyalkylated benzene.

3. An apparatus for carrying out a process as claimed in claim 1, comprising a stirred tank (1) which can be heated directly or indirectly by steam and has means (1a, 1b) for feeding aqueous solution and solvents, a separation vessel (2) and a stripping column (3) for the steam distillation.

4. An apparatus for carrying out a process as claimed in claim 1, comprising a mixer/settler vessel (4), equipped for direct heating by steam and furnished with means (4a, 4b) for feeding aqueous solution and solvents, and a stripping column (5) for the steam distillation.

## Revendications

1. Procédé pour séparer des composés aromatiques à partir de solutions aqueuses contenant du chlorure d'aluminium, par séparation de phases en présence d'un solvant supplémentaire, caractérisé en ce qu'on ajoute à la solution contenant des composés aromatiques une quantité d'un solvant difficilement soluble dans l'eau ou dans une solution de chlorure d'aluminium, ayant un point d'ébullition supérieur à 100°C et pouvant être chassé de la solution de chlorure d'aluminium par distillation par entraînement à la vapeur d'eau, suffisante pour qu'il puisse se former une phase séparable non aqueuse, on mélange d'une manière intense et on chauffe, on laisse décanter, on sépare, puis on traite séparément la phase aqueuse et la phase non aqueuse, le traitement de la phase aqueuse englobant un entraînement à la vapeur d'eau.

2. Procédé selon la revendication 1, caractérisé en ce qu'on utilise, comme solvant, du xylène ou du benzène plusieurs fois alkylé.

3. Dispositif pour mettre en oeuvre le procédé selon la revendication 1, qui comprend une cuve (1), munie d'un agitateur, pouvant être chauffée directement ou indirectement à la vapeur, comportant des moyens (1a, 1b) destinés à introduire une solution aqueuse et des solvants, un récipient séparateur (2), ainsi qu'une colonne de rectification (3) destinée à l'entraînement à la vapeur d'eau.

4. Dispositif pour mettre en oeuvre le procédé selon la revendication 1, qui comprend un récipient mélangeur et décanteur (4), conçu de manière à pouvoir être directement chauffé à la vapeur, et pourvu de moyens (4a, 4b) destinés à amener une solution aqueuse et des solvants, ainsi qu'une colonne de rectification (5) destinée à l'entraînement à la vapeur d'eau.
